# EUROPEAN PATENT APPLICATION

(11) **EP 2 186 413 A1**
(43) Date of publication of application: **19.05.2010**
(21) Application number: 09173830.2
(22) Date of filing: 22.10.2009
(51) Int. Cl.: A21D 2/16, A21D 2/18, A21D 15/02, A23L 1/00, A23L 1/025, A21D 13/00, A21D 17/00

(54) **Baked microwavable frozen bread and bakery products**

(30) Priority: 05.11.2008 US 265559
(71) Applicant: Kraft Foods Global Brands LLC, Northfield, IL 60093 (US)
(72) Inventor: Gan, Renee, Chicago, IL 60614 (US); Forneck, Keith, Chicago, IL 60614 (US); Pai, Ya-Yu, Lombard, IL 60148 (US); Smith, Gary, Glenview, IL 60025 (US)
(74) Representative: Murray, Adrian D'Coligny

(57) **Abstract**

A fully assembled frozen food product is provided which comprises a bread portion having a top portion and a bottom portion and having a filling and co-extensive with, the top and bottom portions, wherein the fully assembled frozen food product can be heated in a microwave oven to provide a heated food product which is then ready to be eaten, wherein the bread portion of the heated food product is not dried out and the filling in the food product has an essentially uniform temperature.

## Description

### RELATED APPLICATION

This application claims benefit of United States Patent Application Serial Number 12/265,559, filed on 5 November 2008, which is hereby incorporated by reference.

### FIELD OF THE INVENTION

This invention relates to a fully assembled frozen bakery product with a filling, especially in the form of a sandwich, which can be heated in a microwave oven from the frozen state without significantly drying or hardening the bakery product. This invention also relates to a bread product which is sufficiently robust to withstand significant microwave heating without significant loss or reduction of organoleptic properties.

### BACKGROUND OF THE INVENTION

Convenience foods (i.e., products which require a minimum amount of consumer preparation and are quick to prepare) are in high demand to accommodate today's busy lifestyles. Examples range from cheese and cracker snacks and canned stews to refrigerated bagels and some frozen dinners. Typically, such products will be eaten as packaged or after a brief heating period, preferably by microwave heating. Notably rare in this category are bread especially those having a filling, which can be heated from the frozen state in a microwave oven.

Baked bread products are normally available as freshly prepared products that are intended to be consumed within a relatively short time period or as frozen products which can be stored in the frozen state for relatively long periods of time and then thawed for consumption. Examples of such frozen bread products include frozen pizzas which are then heated in a conventional or microwave oven. Attempts to prepare microwavable, fully assembled, conventionally-sized frozen bread products having a filling have generally not been successful. Such frozen, filled bread products tend to heat unevenly in a microwave oven due to the different properties of the bread and filling portions. Thus, they generally result in dried out bread and/or fillings at less than the desired temperature (and some portions of the filling may remain cold or even frozen). Such problems from heating such frozen food products in a microwave oven may be due to inadequate moisture control during microwave heating. For instance, when two different food products are simultaneously heated in a microwave oven from a frozen state, the food products may heat at different rates. For example, a farinaceous or bread-based food product may heat from the frozen state comparatively faster than the other food product (e.g., filling). The result can be an overheated bread-based food product that is dry and hard compared to its fresh state. Such differences in heating rates are especially troublesome in a fully assembled sandwich type product where the filling is placed between portions of the bread-based food product since both the densities and the amounts of solid ice/free water of the filling and bread portions may differ significantly.

U.S. Patent Publication 2005/0226963 (October 13, 2005) provided reheatable frozen sandwiches. These sandwiches comprised a meat-containing layer and a cheese-containing layer disposed on each side of a centrally located condiment layer. Thus, the condiment layer component was positioned within the edible filling between meat and cheese layers, and isolated from the toasted bread slices of the sandwich, thereby reducing the potential for moisture gain in the toasted bread slices due to moisture migrating from the condiment layer during frozen sandwich reheating. This structural isolation of a high moisture condiment layer from the toasted bread slices in the sandwich construction helps keep the toasted bread slices crisp upon reheating the sandwich from a frozen state. In effect, the meat-containing and cheese-containing layers act as moisture barriers by prevent moisture migration from the condiment layer to the bread layers. Other moisture barriers are also used in these sandwiches.

Nestlé has attempted to overcome some of these problems associated with microwavable sandwiches. In one approach, Nestlé has introduced various Hot Pockets^{®} Brand Sandwiches where a relatively thin layer of dough surrounds the filling. The bread portion appears to be steamed by the filling with which it is in contact during microwave cooking, which appears to prevent the bread portion from getting hard and tough/chewy. Nestlé has more recently introduced sandwich kits (Comer Bistro^{®} Panini Sandwiches and Lean Cuisine^{®} Panini Sandwiches) in which each slice of the bread product has a separate portion of filling thereon. The slices are then heated side-by-side (i.e., open faced) in a microwave oven on a supplied susceptor disk and then combined by the consumer to form the final sandwich type product. Heating each slice with its filling open sided and side by side provides for more even and faster heating and, thus, tends to avoid the drying of the bread portion and allows the filling to reach the desired temperature. The overall size of the Nestlé sandwich is relatively small (generally less than or equal to about 6 ounces total with each individual topped slice being less than or equal to about 3 ounces) in comparison to a conventional freshly prepared sandwich; larger sandwich prepared in this manner would be expected to have the bread portion dried out and/or the filling below the desired temperature. Moreover, the requirement that the separate halves been heated side by side and then combined, reduces the convenience of the product. Combining the two individual slices of the Nestlé sandwich kit (i.e., forming an assembled sandwich) prior to microwave heating does not appear to provide acceptable results (e.g., the crust on the microwave heated combined product tends to become chewy and tough).

Thus, there remains a need for a fully assembled, frozen bread product having a filling which can be microwaved in its fully assembled form from the frozen state without the bread portion becoming dried out, hardened, or leathery and where the filling portion achieves a desired essentially uniform high temperature, wherein the heated fully assembled bread product and filling retains the desired textural and taste properties. There also remains a need for such a fully assembled, frozen bread product which is approximately the size of a conventional freshly prepared sandwich. There also remains a need for such a fully assembled, frozen bread product that does not require moisture barriers and which is specifically designed for reheating in a microwave oven. There also remains a need for a bread formulation robust enough to withstand the microwave energy required to heat a frozen filling mass to a uniform high temperature and remain palatable (i.e., not dried out, hardened, chewy, or leathery).

The present invention provides such a fully assembled, frozen filled bread product. In a particularly preferred embodiment, the present invention provides a fully assembled, frozen sandwich product having two bread portions with the filling between and co-extensive with the two bread portions, wherein the fully assembled, frozen sandwich product can be heated in a microwave oven without significantly and adversely affecting the organoleptic properties of either the bread portions or the filling to obtain a heated sandwich product. Moisture barriers are not required in the fully assembled, frozen sandwich products of this invention. Kits containing such fully assembled, frozen filled bread product, and especially fully assembled frozen filled sandwich products, are provided.

### SUMMARY OF THE INVENTION

The invention provides a fully assembled frozen food product comprising a farinaceous portion having a top bread portion and a bottom bread portion and having a filling between, and co-extensive with, the top bread and bottom bread portions, wherein the fully assembled frozen food product can be heated in a microwave oven to provide a heated food product which is then ready to be eaten, wherein the farinaceous portion of the heated food product is not dried out and wherein the filling of the heated food product has an essentially uniform temperature. Moisture barriers are not required in the fully assembled frozen food products of the present invention. Preferably such moisture barriers are not used in the fully assembled frozen food products of the present invention.

Generally, the farinaceous portion before microwave heating will have a water activity in the range about 0.9 to about 0.98 and will retain satisfactory texture and chewability characteristics after microwave heating. Generally, the filling after microwave heating will have an essentially uniform temperature of about 160 to about 195°F (i.e., no cold or frozen spots therein) and good organoleptic properties. For purposes of this invention, "an essentially uniform temperature" in the filling is intended to mean that the temperature as measured in the center of the filling does not vary more than about ±20°F (and preferably about ±10°F) from the temperature as measured near the outside portions of the filling; for purposes of this definition, all temperatures are measured about 1 to 3 minutes after completion of the microwave heating to allow the filling to equilibrate. Preferably, the minimum temperature of the filling is at least about 160°F after microwaving.

For purposes of this invention, "bread" refers to fully baked or par-baked farinaceous type products such as, for example, bread, flat bread, buns, rolls, bakery products, and the like; preferably such fully baked or par-baked farinaceous type products are prepared using yeast. Importantly, the composition of the bread dough allows the fully baked or par-baked farinaceous type products to be heated in a microwave oven for a period of time sufficient to heat the filling to the desired temperature without significant hardening or drying out. In other words, the dough formulation has been modified to withstand the extra microwave heating require due to the fully assembled and frozen nature of the present sandwich product. Suitable fillings include, for example, meats (e.g., chicken, turkey, beef, ham, and the like), cheeses, vegetables, tofu, soy, soy derivatives, and the like as well as combinations thereof. Such fillings may also include sauces, dressings, spreads, gravies, condiments, spices, flavorings, colorants, and the like as well as combinations thereof. Generally, such fillings have a relatively high moisture content (i.e., about 70 to about 80 percent or higher).

Generally, the fully assembled frozen sandwiches of the present invention are "full sized" (i.e., comparable in size and weight to freshly prepared conventional food products of the same type). Generally, the fully assembled frozen sandwiches of the present invention are greater than about 6.5 ounces, preferably about 6.5 to about 10 ounces, and more preferably about 7 to about 8.5 ounces. Of course, if desired, smaller or larger sized sandwiches can be prepare using the present invention. The fully assembled sandwiches have the overall shape and size of conventional hand-held sandwich type products. Thus, it (as view from the top) could be circular (similar to a hamburger bun), oval, square, rectangular, rectangular with one or more rounded ends), and the like. Although the dimensions can vary, the fully assembled frozen food products are generally about 1 to about 3 inches thick (as measured from the top surface of the upper bread portion to the bottom surface of the lower bread portion) and have an overall diameter of about 3.5 to about 5.5 inches for circular products or overall dimensions of about 2.5 to about 4 inches by about 5 to about 8 inches for other shaped products.

In one especially preferred embodiment, the fully assembled frozen food product of this invention is a fully assembled frozen sandwich having a top bread portion, a bottom bread portion, and a filling dispersed between, and co-extensive, the bottom and top bread portions. For purposes of this invention, the bottom and top bread portions may be fully separated, connected with a "hinge" on one or more sides, or integral with each other (e.g., wrapped around the filling as in a stromboli-type or calzone-type sandwich). The fully assembled frozen food product is adapted for use in a "single-serving" kit which provides the fully assembled frozen food product; if desired, other snack or lunch-type food products or components can also be included. Such other snack or lunch-type food products or components should, of course, be suitable for frozen storage and consumption when the fully assembled frozen food product is prepared in a microwave oven. Such other snack or lunch-type food products or components could include, for example, frozen desserts, cookies, candy bars, cupcakes, and the like.

Preferably, such a product or kit is contained in a single serve package having separate compartments and/or pouches for the various ingredients. The pouches preferably are sealed under an inert atmosphere to increase the shelf life of the product or kit. The fully assembled frozen food product (preferably a fully assembled frozen sandwich) is preferably contained in a separate package which can then be opened and then heated directly in the microwave oven. The kits and/or single serve packages containing the fully assembled frozen food product generally have a shelf life of at least 120 days under proper storage (i.e., frozen) conditions.

As noted, the package containing the fully assembled food product preferably includes one or more microwave susceptors to assist in the microwave heating; in such case, the opened package containing the fully assembled food product and microwave susceptor(s) are directly placed in the microwave oven. Alternatively, separate microwave susceptor(s) can be included in the package; in such case, the fully assembled frozen food product is then placed on the susceptor and the combination placed in the microwave oven for heating. Even more preferably, top and bottom susceptors are provided such that the fully assembled frozen food product can be placed between, and essentially contained within the space between, the top and bottom susceptors when the product is microwaved.

The present invention is related to U.S. Patent Application Serial Number 11/531,592 ("PACKAGING SYSTEM FOR STORAGE AND MICROWAVE HEATING OF FOOD PRODUCTS"); U.S. Patent Application Serial Number 11/531,585 ("PACKAGING METHOD FOR STORAGE AND MICROWAVE HEATING OF FOOD PRODUCTS"); and U.S. Patent Application Serial Number 11/531,578 ("MPCROWAVABLE FOOD PRODUCTS"), all of which were filed on the same date (i.e., September 13, 2006) as this present specification, all of which are owed by the same assignee, and all of which are hereby incorporated by reference in their entireties.

### BRIEF DESCRIPTION OF THE DRAWINGS

Figure 1 provides a side view of a fully assembled sandwich product of the present invention. The filling is co-extensive with the upper and lower bread portions.

Figure 2 provides, in top view A-D, several configurations of a fully assembled sandwich product of the present invention.

Figure 3 provides illustrations of a stromboli-type sandwich having open ends (perspective view A and cross-sectional view B).

Figure 4 illustrates a defective sandwich in which the filling is not co-extensive with the upper and lower bread portions, thereby increasing the risk of portions of the upper and lower bread portions drying out and/or hardening during microwave heating.

Figure 5 provides a general flow chart illustrating a general method for the preparation of fully assembled frozen sandwich products of the present invention.

Figure 6 provides a more detailed flow chart illustrating another method for preparing bread or fully assembled frozen sandwich products of the present invention.

Figure 7 provides a more detailed flow chart illustrating the preparation of fully assembled frozen stromboli-type sandwich products of the present invention.

Figure 8 provides a side view of a fully assembled sandwich product of the present invention wherein the outer sides of bread portions are crisped and the inner sides are non-crisped. The filling is co-extensive with the upper and lower bread portions.

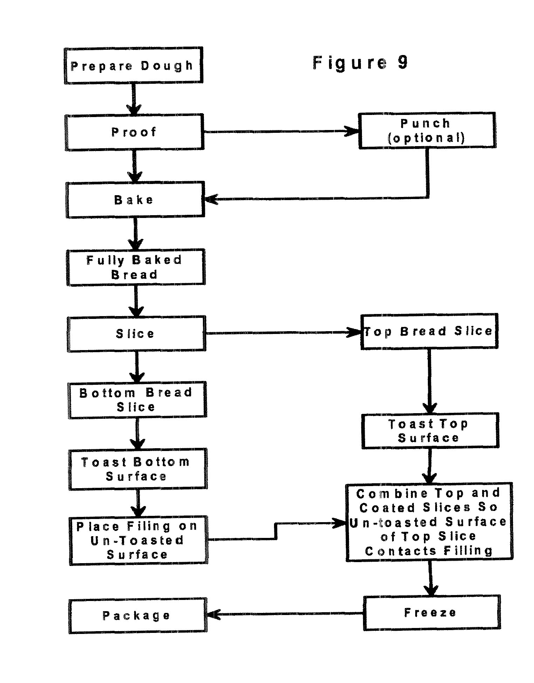

Figure 9 provides a general chart illustrating a general method for the preparation of the fully assembled frozen sandwich product of Figure 8.

### DETAILED DESCRIPTION

The invention provides a fully assembled frozen food product comprising a bread portion having a top portion and a bottom portion and having a filling between, and co-extensive with, the top and bottom portions, wherein the fully assembled frozen food product can be heated in a microwave oven to provide a heated food product which is then ready to be eaten, wherein the bread portion of the heated food product is not dried out and wherein the filling in the heated food product has an essentially uniform temperature. Generally, the bread portion before microwave heating will have a water activity in the range about 0.9 to about 0.98 and will retain satisfactory texture and chewability characteristics after microwave heating. Generally, the filling after microwave heating will have an essentially uniform temperature of about 160 to about 195°F (i.e., no cold or frozen spots therein) and good organoleptic properties.

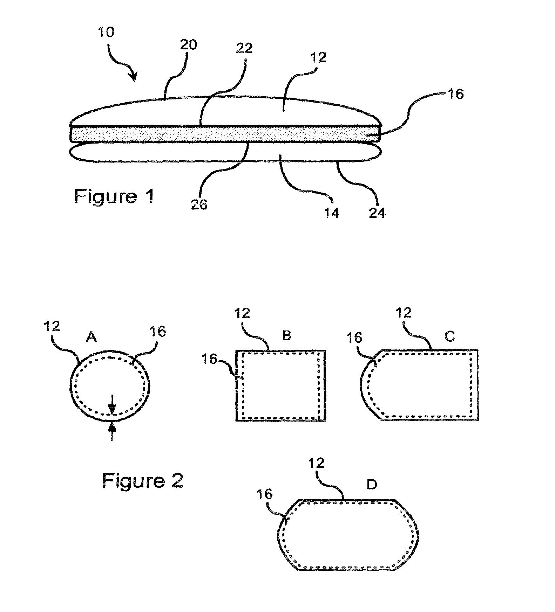

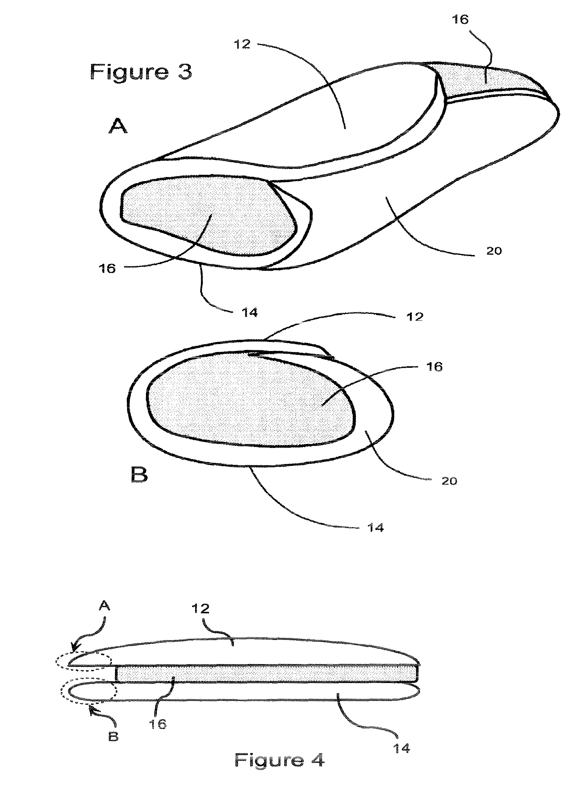

Figure 1 illustrates a fully assembled frozen sandwich product 10 of this invention having a top or bread portion 12, a bottom or lower bread portion 14, and a filling portion 16 between, and co-extensive with, the top and bottom bread portions 1 and 14. The top bread portion 12 has an upper surface or crust portion 20 and a lower or cut surface 22 which is in contact with the upper surface of filling 16; likewise, the bottom bread portion has a lower surface or heel portion 24 and a upper cut surface 26 which is in contact with the bottom surface of filling 16. For purposes of this invention, the term "co-extensive" is intended to mean that the filling essentially covers the top and bottom bread portions with minimal "non-overlapping area. The filling should be co-extensive with the top and bottom bread portions to reduce the risk of drying out of the top and bottom bread portions during microwave heating of the fully assembled frozen sandwich product. For purposes of this invention, "essentially covers" is intended to mean that at least about 92 percent, preferably at least about 95 percent, and more preferably at least about 98 percent of the both the bottom surface of the top bread portion and the upper surface of the bottom bread portion are covered by the filling 16. Figure 2 (not to same scale as Figure 1) illustrates in top view several possible shapes for the fully assembled frozen sandwich product 10; the top bread portion 12 and the underlying filling 16 are shown. Figure 2A illustrates an essentially circular sandwich product; Figure 2B illustrates an essentially square or rectangular sandwich product; Figure 2C illustrates an essentially rectangular sandwich product having a rounded end; and Figure 2D illustrates an essentially rectangular sandwich product having two rounded ends. Figure 2A also illustrates how filling 16 "essentially covers" the top bread portion 12; generally the distance between the two arrows at the bottom of the Figure 2A should be less than about ⅓ inch and preferably less than about ¼ inch to avoid drying out the bread during the microwave heating step. Figures 3A (perspective view) and 3B (cross-section view) illustrate a stromboli-type sandwich of this invention which can be prepared by folding a dough 20 to contain the filling. The top portion 12 and the bottom portion 14 are formed by appropriate folding of the dough 20 to enclosed, at least partly, the filling 16. The ends of the stromboli-type sandwich shown in Figure 3A are open such that the filling 16 is exposed; one or both ends could, however, be closed (not shown) by appropriate folding of the dough to provide a stromboli-type sandwich such that the filling is exposed on one end or completely enclosed. Generally, the thickness of the dough 20, after baking, is at least about ¼ inch, preferably at least about ⅓ inch, and more preferably at least about ½ inch. Calzone-type sandwiches (typically "half-moon" shaped) can be prepared in the same manner although the edges would normally be sealed by crimping or other methods.

Figure 4 illustrates a defective (i.e., non-inventive) sandwich in which the filling is not co-extensive with the upper and lower bread portions. On the left hand side of Figure 4, the filling 16 does not extend to the outside edges of the top and bottom bread portions 12 and 16, thereby creating a significant "non-overlap area" for both top and bottom bread portions 12 and 16. This non-overlap area increases the risk that portions A and B, respectively, of the top and bottom bread portions will be dried out during microwave heating. Generally, the filling can be recessed (see Figure 2A wherein this recess is shown between the two arrows) up to about ⅓ inch from the outside of the bread portion without causing significant drying out of the bread during microwave heating; preferably this recess is less than about ¼ inch.

Thus in preparing the fully assembled frozen food products of this invention it is important to insure that the filling is co-extensive with the top and bottom bread portions. Thus, the top and bottom surfaces of the filling should have approximately the same shape and surface area as the corresponding surfaces of the top and bottom bread portions so that sufficient overlapping of the filling and the top and bottom bread portions (see, e.g., Figure 1).

The fully assembled frozen food product can be contained in a package that can also used to hold the fully assemble frozen food product during microwave heating so that the co-extensive nature of the food product can easily be maintained during microwave heating. Alternatively, instructions should be provided so that the consumer maintains the co-extensive nature of the food product during microwave heating. Of course, if the filling is co-extensive with the bread portions at the time of freezing, the frozen nature of the product will likely assist in maintaining the co-extensive relationship during distribution. The packaging is designed to assist in maintaining this co-extensive relationship during distribution.

Preferably, the fully assembled frozen food product is supplied with an appropriately sized and shaped susceptor or susceptors to assist in the microwave heating process. Various types and forms of susceptors as are known in the art can be provided for use in the present invention. For example, the susceptor may be a film having a layer of metal deposited thereon. In addition, the susceptor may have different thicknesses to assist in concentrating heat energy at select portions of the fully assembled frozen food product. The susceptor may be an integral part of the packaging of the fully assembled frozen food product or may be a separate component upon which the fully assembled frozen food product is placed before microwave heating.

The susceptor is preferably, though not necessarily, of a type that expands upon heating to better conform to the adjacent portion of a food product. One especially preferred expanding susceptor material is made and sold by Graphics Packaging, Inc., Marietta, Georgia, under the product name QuiltWave™. In addition, the expanded susceptor can have multiple channels or groves formed therein that permit venting of moisture away from the surfaces of the food product adjacent thereto. Such venting can advantageously reduce the potential for moisture accumulation on those surfaces of the food product adjacent the susceptor. Other venting mechanisms may be used instead or in addition. For example, a corrugated susceptor material may also function to vent moisture during microwave heating.

Preferably, both a bottom susceptor and a top susceptor are used to effectively surround or enclose the fully assembled frozen food product. Especially preferred embodiments of such susceptors are shown U.S. Patent Application Serial No. 11/284,801 (filed November 22, 2005), which is hereby incorporated by reference in its entirety. Preferably, both the bottom and top susceptors are formed using the QuiltWave™ material and have appropriate venting mechanisms to allow moisture to escape.

Baking science involves a complicated process employing time, temperature and relative humidity to produce various bread products. The time, temperature and relative humidity parameters are generally different for bread, roils, pizza crusts, pastry and cereal products, not only with regard to their appearance (crust color, size, etc.), but also with regard to the development, texture, and size. Some of the desirable changes caused by baking are protein denaturing, starch gelatinization, moisture migration and veracity (cell development or grain). Many factors may be involved in preparing a baked product which is appealing in the eyes of the ultimate consumer. A manufacturer must also consider items such as shelf life and how a consumer will actually use a product. Consequently, it is desirable to have some quantitative measure by which one can determine whether a production line product meets specification. One such measure is water activity.

Water activity is a measure of vapor pressure generated by the water present in a product divided by that of pure water at the same temperature. Mathematically it is expressed as: A_{w} = (P_{t/}Pₒ)T, where Pₜ is the partial pressure of water in the food and pₒ is the vapor pressure of the water, with both at the temperature T. Water activity may be measured with a water activity meter. Water activity may be measured after it comes out of the oven and is cooled to about 100°F. Cracker products typically have a water activity in the range of about 0.35 to 0.50. Common baked goods, for example, bread, dinner rolls and pizza crusts, typically have a water activity in the range of about 0.90 to 0.98. The fully baked or par-baked bread products of this invention preferably have water activities of about 0.9 to about 0.98, with a value of about 0.96 being particularly preferred. Such fully baked or par-baked bread products have satisfactory frozen storage characteristics as well as satisfactory texture and taste when heated in a microwave oven.

The moisture content of the baked product can also be determined. The water content of the bread product may be measured after baking the bread and cooling it to about 100°F, such as using a vacuum oven method or by weight difference between the bread product after cooling to about 100°F and after further, more complete drying (i.e., using a desiccator or vacuum oven, or other suitable and reliable method). Generally, the moisture content of fully baked or par-baked bread product is about 30 to 38 percent, and preferably in the range of about 34 to about 38 percent.

Since yeast is included in the formulation of the bread dough, a fermentation stop is included in the dough preparation. The fermentation step allows the yeast to produce carbon dioxide gas which stretches and mellows the gluten contained in the flour, and aids in producing good flavor and texture. Techniques such as the "sponge and dough" method (i.e., fermenting a portion of the dough and adding an aliquot of the fermented dough to bulk unfermented dough) or the "brew system" method (i.e., fermenting some yeast, flour, and the like in a liquid system and then adding as separate ingredient) could be used if desired. Punching down, if used, occurs after fermentation and proofing.

The bread products used in the present invention may be prepared using a dough containing a combination of gums (e.g., xanthan and guar with the xanthan at higher than conventional levels) and additional ingredients (e.g., methylcellulose and DATEM) in the dough formulation provides an improved bread product for use in this application. Although an enzyme as used in the dough formulations of U.S. Patent Nos. 6,764,700 and 6,919,097 (both of which are incorporated by reference in their entireties) is not needed in the present application (and therefore is preferably not used), it can be included if desired. Thus, an especially preferred recipe (in baker's percentages) for the dough prepared according to a preferred embodiment of the invention is provided in the following table.

| Ingredient | Range (% flour basis) | Preferred Range (% flour basis) | Most Preferred (% flour basis) |
|---|---|---|---|
| Flour | 100 | 100 | 100 |
| Compressed Yeast | 0.5 - 5.0 | 2 - 3 | 2.5 |
| Sodium Stearoyl Lactylate | 0.0 - 0.5 | 0.3 - 0.4 | 0.38 |
| Salt | 0.5 - 3.0 | 0.75 - 1.75 | 1.25 |
| Sweetener (e.g., sugar) | 4.0 - 12.0 | 6.0 - 10.0 | 8.0 |
| Calcium Propionate | 0.0 - 0.5 | 0 - 0.5 | 0 |
| Oil/Fat | 5.0 - 15.0 | 9.0 -13.0 | 11.0 |
| Water | 50.0 - 68.0 | 55.0 - 64.0 | 60.0 |
| Monoglycerides/ Diglycerides | 0.1 - 2.0 | 0.1 - 1.5 | 0.2 |
| Lecithin | 0.2 - 1.5 | 0.4 - 0.6 | 0.5 |
| Xanthan | 0.1 - 1.0 | 0.25 - 0.45 | 0.35 |
| Guar | 0.2-1.5 | 0.4-0.6 | 0.5 |
| Enzyme (e.g., Alpha Amylase) | 0 - 0.45 | 0 - 0.35 | 0 |
| Methylcellulose | 0.2 - 1.5 | 0.3 - 0.6 | 0.5 |
| Diacetyl Tartaric Acid Esters of Monoglycerides (DATEM) | 0.1 - 0.5 | 0.3 - 0.6 | 0.5 |
| Spices/Seasonings/Flavors | 0.0-1.0 | 0.1 - 0.5 | 0.25 |

Moreover, the dough formulations of U.S. Patent Nos. 6,764,700 and 6,919,097 could be used in the present invention if modified to include the combination of gums (e.g., xanthan and guar) and additional ingredients (e.g., methylcellulose and DATEM) as used in the present invention. In other embodiments, other ingredients may be substituted for those listed above. For example, calcium stearoyl lactylate might be used in place of, or with, the sodium stearoyl lactylate. The flour is preferably hard wheat bread flour made from hard spring, winter wheat, or mixtures thereof. Suitable oils and/or fats include vegetable oils, shortening, hydrogenated fats or oil, and the like. Preferably the fat is a solid, hydrogenated or partially hydrogenated vegetable oil; for example, a hydrogenated or partially hydrogenated cottonseed, corn, soybean, sunflower, canola oil, or mixture thereof, and similar hydrogenated or partially hydrogenated vegetable oils and mixtures. The preferred vegetable oils are com, canola, sunflower seed, cottonseed and soybean oils, or mixtures thereof, with soybean oil being the most preferred; fat substitutes such as Olestra™ and Benefat™ can also be used in combinations with such oils or fats. The oil may have a butter flavoring agent added by the producer. Alternatively, a butter flavoring agent or other flavoring agent may be added to the recipe in an amount known to those skilled in the art or in accordance with the flavor manufacturer's recommendations. Generally, the preferred sweetener is sucrose. Other types of sweeteners (e.g., natural, artificial, corn syrups, and the like); of course, if use, the levels of such other sweeteners should be adjusted to provide the desired level of sweetness and, if necessary (i.e., if corn syrup is used), the level of water may be adjusted to account for water added with the sweetener. Dry yeast may be substituted for the compressed yeast used in the above basic recipe. If dry yeast is used, the baker's percentage or weight is cut to account for the water content of the compressed yeast; likewise, the amount of water added may be increased to account for the water content of the compressed yeast. Therefore, if dry yeast is used in the above general recipe in place of compressed yeast, the amount (flour basis) of dry yeast will be in the range of about 0.3 to about 1.7 percent, preferably about 0.6 to about 1 percent.

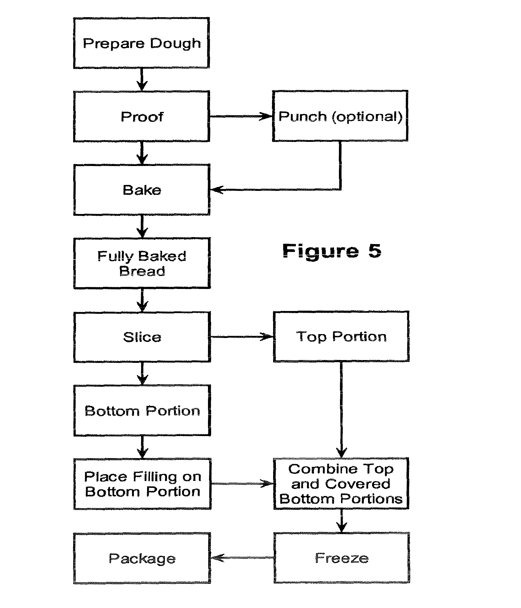

Figure 5 illustrates a general method of preparing fully assembled frozen food products of the present invention. As those skilled in the art will realize, the order of steps shown in Figure 5 can be modified if desired; for example, freezing can occur before or after packaging. The dough is prepared, formed into the desired amount and shape, and then proofed (generally at about 90 to about 105°F for about 30 to about 60 minutes at a relative humidity of about 50 to about 95 percent). The proofed dough may then be baked or it may be "punched down" prior to baking. If desired, the dough may be punched down by simply compressing the dough before baking. Generally, punching down is preferred since it appears to provide a somewhat better and denser texture in the finished fully assembled sandwich product after microwaving. The proofed dough (whether optionally punched down or not) is then baked in a conventional oven to obtain a fully baked or par-baked bread product. Generally, as those skilled in the art will realize, the baking conditions will largely depend on the type of oven used and the size/weight of the dough. For example, a dough piece (about 4 ounces) in the shape of a round hamburger could be baked in an impingement type oven at about 425 to about 450°F for about 4 to about 5 minutes or in a gas-fired tunnel oven (direct or indirect) at about 350 to about 400°F for about 10 to 25 minutes.

The fully baked or par-baked bread is then generally sliced to form the top bread portion and the bottom bread portion of the sandwich. If the fully baked or par-baked bread is in the form of a bun or roll, it is sliced so that the two halves form the top (the so-called "crown") and bottom (the so-called heel) bread portion. If the fully baked or par-baked bread is in the form of a loaf, slicing it will generally result in multiple slices (depending on the size of the loaf) which can be used to form more than one fully assembled sandwich. Generally, the fully baked or par-baked bread is sliced completely through to form separate top and bottom bread portions. If desired, however, the slicing may not be complete such that the top and bottom bread portions remain attached through a hinge so long as the filling can be placed between the top and bottom bread portions. For stromboli-type or calzone-type sandwiches, splicing is generally not necessary since the dough encloses the filling. Such sandwiches may be open at one or more ends (see Figure 3) or closed at the ends (such that the filling is entirely contained within the bread portion). In cases where the filling is largely or entirely contained within the bread portions, the bread preferably has optional slits or other opening to allow for moisture venting during microwave heating.

The filling is then placed on one of the top or bottom bread portions (preferably on the bottom bread portions) using any suitable automatic, semiautomatic, or manual technique. Suitable fillings include, for example, meats (e.g., chicken, turkey, beef, ham, and the like), cheeses, vegetables, tofu, soy, soy derivatives, and the like as well as combinations thereof. Such fillings may also include sauces, dressings, spreads, gravies, condiments, spices, flavorings, colorants, and the like as well as combinations thereof. Generally, such fillings have a relatively high moisture content (i.e., about 60-80 percent or higher). Preferably, meat and vegetables in the filling are in the form of lumps or diced shapes (generally less than about 2 inches the longest dimension).

The meat may be in a shaved, sliced, shredded, chopped, or other convenient form. The type of meat that may be used is not particularly limited. The meat may be beef (e.g., roast beef, barbecued beef, steak, hamburger, etc.); poultry (e.g., chicken breast, barbecued chicken, turkey breast, turkey burger, chicken salad, etc.); pork (e.g., ham, barbecued pork, ham salad, etc.); fish (e.g., tuna, tuna salad, lox, etc.); egg products. The meat filling also may be processed meats like bacon, sausage, bologna, olive loaf, pepperoni, salami, corned beef, pastrami, liverwurst, and so forth. Combinations of such meat products may be used if desired. Soy or soy derivative products may be used as a protein source in combination with the meat filling, or alternatively in place thereof in the sandwich filling. The water content and water activity of the meat filling may vary greatly depending on the type of meat selected. For instance, leaner cuts of meat generally contain less water content than less lean cuts. For example, processed luncheon meats or deli style meats that may used in the sandwich constructions described in embodiments herein may comprise about 70 to about 80 percent moisture.

The type of cheese that may be used is not particularly limited. The cheese may be in form of shredded, sliced, shaved, flaked, powdered, crumbled, slabbed, creamed, and so forth; preferably, the cheese is in the form of cheese shreds The cheese type, for example, may be process cheese, cheddar cheese, Swiss cheese, American cheese, Provolone cheese, mozzarella cheese, Parmesan cheese, blue cheese, Monterey Jack cheese, Romano cheese, cream cheese, Havarti cheese, Gouda cheese, Muenster cheese, Asiago cheese, Gorgonzola cheese, and combinations thereof. The water content and water activity of the cheese may vary greatly depending on the type of cheese selected; preferably the cheese contains about 40 to about 45 percent moisture.

Vegetables suitable for use in the filling include, for example, onions, tomato, peppers, garlic, bean sprouts, cucumber, zucchini, potato, kale, basil, and the like as well as combinations thereof.

Both the bread portions and the filling can be seasoned, such as with salt, pepper, oregano, hot pepper flakes or spreads, onion powder, powder, sesame seeds, poppy seeds, cinnamon, and the like as well as combinations thereof. Food additives, such as preservatives, flavorings, colors, emulsifiers, soy flour, and so forth, also can be included in or applied to the fillings.

All or some of the ingredients in fillings may be premixed if desired; alternatively, all of some of the ingredients may be individually placed on the appropriate bread portion. All or some of the ingredients in the filling may be frozen or thawed when placed on the appropriate bread portion. Indeed the entire filling may be prepared and then frozen into the appropriate size and shape (i.e., puck or other shape) to fit in the sandwich and then placed frozen in the sandwich. The bread may also be pre-frozen. Once the filling is placed on the appropriate bread portion the sandwich is assembled by appropriately placing the other bread portion with the covered bread portion. Generally, the assembled filled sandwich is frozen after being assembled. Conventional freezing techniques are used to freeze the assembled sandwich. Preferably, the sandwich is frozen within about 30 minutes after being assembled, and more preferably within about 2 to 5 minutes, after being assembled with a blast or nitrogen tunnel freezer. The assembled sandwich is packaged, preferably using modified atmosphere techniques, frozen (if not already frozen), and then stored under suitable conditions. Susceptors, if used, may be included in the same package as the assembled sandwich or may be separately contained in the kit.

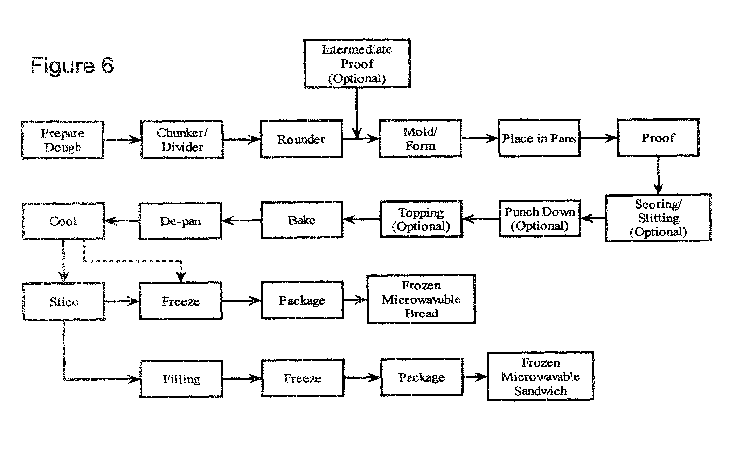

Figures 6-7 illustrate more detailed flow charts of methods by which the fully assembled frozen food products of this invention can be prepared. As those skilled in the art will realize, the various steps of the processes shown in Figures 6-7 (as well as the more general process shown in Figure 5) can be modified, reordered, eliminated, and/or incorporated in one or more of the other processes shown depending on the specific type of sandwiches being made, the equipment available, desired optional steps, and other considerations of the bakery industry.

Figure 6 provides a detailed flow chart illustrating methods of preparing frozen microwavable bread and frozen microwavable fully assembled sandwiches wherein the bread portion can withstand significant microwave heating. The dough composition is first subjected to a chunker/divider to provide the desired weight of the dough. The divided dough is then rounded and formed into the desired shape. If desired, the dough may be subjected to an intermediate proof step (at ambient temperatures and ambient relative humidity for about 2 to 10 minutes) to allow the dough to relax prior to molding. The molded or formed dough is then placed in individual pans of the appropriate size and shape and then proofed (about 85 to about 105°F for about 20 to about 60 minutes at a relative humidity of about 50 to about 95 percent). After proofing, the dough composition can optionally be scored or slitted, punched down, and/or topped with various ingredients (e.g., spices, flavors, and the like). The individual bread products are then baked (about 350 to about 450°F for about 5 to about 30 minutes depending on the type of oven used), depanned, and cooled (generally to about 100°F or less). To form the bread products of this invention, the cooled baked bread can be sliced or left unsliced as desired and then frozen and packaged (preferably under modified atmosphere conditions) to provide frozen microwave bread products. To form the sandwich products of this invention, the cooled baked bread is then appropriately sliced after which the filling is applied between the top and bottom portions of the sliced bread; the assembled sandwich is then frozen and packaged (preferably under modified atmosphere conditions) to provide frozen microwave fully assembled sandwiches.

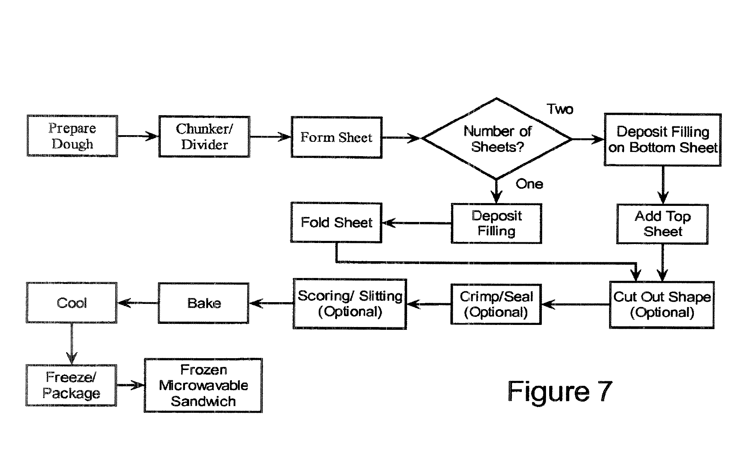

Figure 7 provides a detailed flow chart illustrating the preparation of stromboli-type or calzone-type sandwiches of this invention. The prepared dough is subjected to a chunker/divider to obtain the desired amount of dough. The dough is then formed into an appropriate sheet. If only one sheet is used to prepare the sandwich (generally for stromboli-type), filling is deposited on the sheet, the sheet is folded to form the desired sandwich. Two sheets can also be used (generally for calzone-type), in which case, the filling is deposited on the bottom sheet and then the top sheet is added to form the desired sandwich. The formed sandwich can then, if desired, cut out in to a desired shape, crimped or sealed so an to maintain the filling within the bread portion, and then scored or slitted to allow venting during baking. The thus-formed sandwich is then baked (about 350 to about 450°F for about 5 to about 30 minutes depending on the type of oven used), cooled, and then frozen and packaged (preferably under modified atmosphere conditions) to form the frozen, fully baked or per-baked, fully assembled microwavable sandwich product. Although not shown, such stromboli-type and calzone-type sandwiches can also be prepared by co-extrusion techniques such that the unbaked dough surrounds the filling. Such extruded stromboli-type and calzone-type products can then be treated in the same manner as shown in Figure 7 to provide the frozen, fully baked or par-baked, fully assembled microwavable sandwich product.

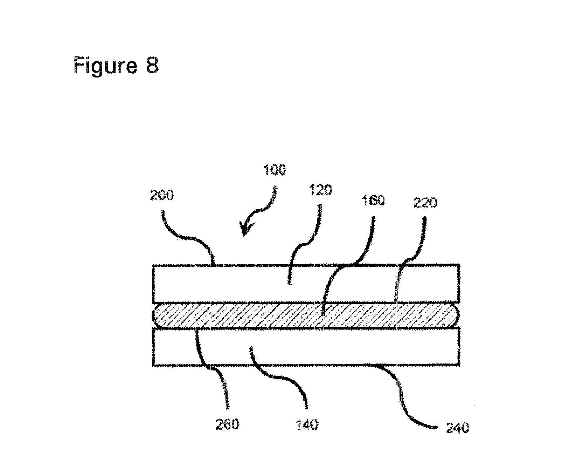

Sandwiches having a crispy texture (after microwaving) on the outer surfaces of the top and/or bottom layers of bread can also be prepared using the general process of this invention. Such a crispy textured sandwich is illustrated in Figure 8 wherein the upper bread slice 120 has a crispy top surface 200 and a non-crispy bottom surface 220 and the lower bread slice 140 has a crispy bottom surface 240 and a non-crispy upper surface 260. The filling 160 is in contact with both the non-crispy surface 220 of the upper bread slice 120 and the non-crispy surface 260 of the lower bread slice 140, respectively. The crispy top surface 200 and the crispy bottom surface 240 form the outer surfaces (i.e., top and bottom) of the sandwich 100. Preferably, the crispy top 200 and crispy bottom 240 surfaces of the upper 120 and lower 140 bread slices are prepared prior to combining the upper 120 and lower 140 bread slices with the filling 160 to form the actual sandwich.

Example 5 provides a sandwich using a mirocwave susceptor to achieve such a crispy texture. The crispy surfaces 200 and 240 are preferably prepared by subjecting only one side of each of the bread slices 120 and 140, respectively, to a heat energy source, preferably a radiant heat energy source, sufficient to form the desired crispy or toasted surfaces without significantly affecting the inner portions or non-crispy surfaces of the bread slices 120 and 140. For purposes of this invention, "significantly affecting" is intended to mean that the radiant heating does not reduce the water activities of the non-crispy surfaces by more than 0.3 on a water activity scale, and preferably less than about 0.1 on a water activity scale relative to the water activities prior to the radiant heating step. If desired, the bread slices 120 and 140, and more particularly the crispy surfaces 200 and 240, can be cooled after exposure to the heat energy source.

Figure 8 provides a generally flow for preparing the "toasted" or crispy textured sandwiches of Figure 7. This procedure is essentially the same as that shown in Figure 5 except that the top surface of the top bread slice and the bottom surface of the bottom bread slice are toasted using a suitable heat source (e.g., radiant heat) prior to placing the filling on the un-toasted surface of the bottom bread slice and combining the top and bottom (with filling) to form the sandwich such at the toasted sides of the top and bottom bread slices, respectively, form the top and bottom of the sandwich. The toasting step or steps should not significantly affect the inner portions and/or the non-crispy surfaces of either the top and bottom bread slices (i.e., the surfaces of the top and bottom bread slices contacting the filling in the final sandwich); in other words, only the top and bottom surfaces of the final sandwich are preferably toasted. Generally, only the about 1.5 to about 3 mm of the top and bottom toasted surfaces should be affected by the heat source.

As is well known in the art and discussed above, heating bread in a microwave oven for a relatively long period of time is very abusive in terms of the bread organoleptic properties. Thus, microwave heating of a fully-assembled conventionally-sized frozen sandwich for a time sufficient to raise the temperature of the center of the frozen filling to at least about 160°F is a harsh and difficult environment. Microwave heating of similar types of products which (1) are smaller in size and/or weight, (2) are open faced such as pizza or open faced sandwiches, and/or (3) contain less bread, filling, and/or topping would not present as great a challenge. The bread formulations of the present invention are designed so as to provide good organoleptic properties even under such harsh and difficult microwaving environments. Thus, the use of bread formulations of the present invention to prepare bread products which do not present as great a challenge a fully-assembled conventionally-sized frozen sandwich would be expected to provide microwavable products having as good as, if not better, organoleptic properties as similar products prepared with conventional dough formulations, including conventional dough formulations used in microwavable products currently available in the marketplace. Although the present dough formulations are especially designed for use with the fully-assembled nventionaiiy-sized frozen bread products, and especially with the fully-assembled conventionally-sized frozen sandwiches, of this invention, the present dough formulations can be used to advantage in other bread products, including those intended to be heated in microwave ovens.

The following examples are intended to illustrate the invention and not to limit it. Unless otherwise noted, all percentages, ratios, and the like are based on weight.

**Example 1.** This example illustrates the preparation of several bread products. The resulting bread products were evaluated for their ability to withstand microwave heating. Two control bread products and one inventive bread product were prepared. The first control bread product was prepared from a conventional dough formulation. The second control bread product was prepared from a dough similar to the inventive dough formulation except that xanthan gum was omitted from the formulation. The formulations, expressed in baker's percentages, for the three dough samples are provided below:

| Ingredient | Control 1 (% flour basis) | Control 2 (% flour basis) | inventive (% flour basis) |
|---|---|---|---|
| Flour | 100 | 100 | 100 |
| Compressed Yeast | 2.75 | 2.75 | 2.75 |
| Sodium Stearoyl Lactylate | 0.38 | 0.38 | 0.38 |
| Salt | 1.1 | 1.1 | 1.1 |
| Sucrose | 8.0 | 8.0 | 8.0 |
| Soybean Oil | 7.0 | 7.0 | 7.0 |
| Shortening | 4.0 | 4.0 | 4.0 |
| Water | 60.0 | 60.0 | 60.0 |
| Monoglycerides/ Diglycerides | 0.2 | 0.2 | 0.2 |
| Lecithin | 0.5 | 0.5 | 0.5 |
| Xanthan | 0 | 0 | 0.35 |
| Guar | 0 | 0.5 | 0.5 |
| Methylcellulose | 0 | 0.5 | 0.5 |
| Diacetyl Tartaric Acid Esters of Monoglycerides | 0.5 | 0.5 | 0.5 |
| Spices/Seasonings/Flavors | 0.75 | 0.75 | 0.75 |

After mixing the dry ingredients in a Hobart mixer for about 30 seconds (low setting), the yeast, shortening, oil, flavorings, and water were added and mixing continued for about 2 minutes at a low setting followed by an additional 4 minutes at a higher setting. After holding the dough for about 5 minutes, it was divided into 110 g units and formed into oval shapes. The individual units were then proofed at about 105°F for about 40-50 minutes at 80-85 percent relative humidity. Proofed units were then used as is (i.e., non-punched) or were punched. After baking in an impingement oven at 450°F for 4.5 minutes, the fully baked or par-baked bread were cooled and sliced by hand using an electric knife to form top and lower bread portions. The top and lower bread portions were then combined (without filling as in the original unsliced form), frozen, and then packaged under modified atmosphere conditions.

For evaluations, the frozen assembled sandwiches (without any filling between the top and bottom bread portions) were placed on a raised tray without a susceptor and heated in a microwave oven at full power for 1 minute and 30 seconds. The heated bread products were then removed from the oven and held at ambient temperature for 5 or 15 minutes before quality evaluation by trained experts (for consistency, the same experts were used in all evaluations). The crown (i.e., top surface) and crumb (i.e., cut surface) of the top portion and the crumb (i.e., cut surface) and heel (i.e., bottom surface) of the bottom portion were examined for hardness. Hardness was measured on a 1-5 scale (1 for soft and 5 for "rock" hard); thus, for hardness, a lower score indicates a more desirable result. Two parameters were measured for each of the four surfaces: (1) the hardness of the hardest spot found; and (2) average or overall hardness based on coverage of hard spots and their hardness. The percentage of surface covered by hard spots (independent of the degree of hardness) was also estimated for each of the four surfaces. The results were summed over all surfaces and averaged. The following average results were obtained for non-punched and punched samples:

### Non-Punched:

| | Control 1 Bread | | Control 2 Bread | | Inventive Bread | |
|---|---|---|---|---|---|---|
| | 5 min | 15 min | 5 min | 15 min | 5 min | 15 min |
| Average Hardest Spot | 2.5 | 3.5 | 2.0 | 2.9 | 2.0 | 2.5 |
| Average Overall Hardness | 2.2 | 3.2 | 1.8 | 2.8 | 1.5 | 2.5 |
| Average Coverage Percentage | 42.5 | 52.5 | 12.5 | 20.0 | 13.8 | 21.2 |

### Punched:

| | Control 1 Bread | | Control 2 Bread | | Inventive Bread | |
|---|---|---|---|---|---|---|
| | 5 min | 15 min | 5 min | 15 min | 5 min | 15 min |
| Average Hardest Spot | 3.4 | 4.5 | 3.2 | 4.1 | 1.4 | 3.1 |
| Average Overall Hardness | 3.0 | 4.2 | 2.6 | 3.6 | 1.9 | 2.9 |
| Average Coverage Percentage | 62.5 | 82.5 | 31.2 | 41.2 | 20.2 | 47.5 |

Generally, the inventive sample was softer and more acceptable than either Control.

The overall quality of each bread sample was also evaluated 5 and 15 minutes after microwaving using a 1-5 scale with 1 the best and 5 the worst. The following results were obtained:

| | Control 1 Bread | | Control 2 Bread | | Inventive Bread | |
|---|---|---|---|---|---|---|
| | 5 min | 15 min | 5 min | 15 min | 5 min | 15 min |
| Average Quality Score (non-punched) | 2.45 | 3.59 | 1.46 | 2.49 | 1.35 | 2.20 |
| Average Quality Score (punched) | 3.17 | 4.35 | 2.01 | 2.95 | 1.61 | 2.95 |
| Average Quality Score (all) | 2.81 | 3.97 | 1.73 | 2.72 | 1.48 | 2.57 |

The scores for both 5 and 15 minute evalutions were also combined and are as follows.

| | Control 1 Bread | Control 2 Bread | Inventive Bread |
|---|---|---|---|
| Average Quality Score (non-punched) | 3.02 | 1.97 | 1.78 |
| Average Quality Score (punched) | 3.76 | 2.48 | 2.28 |
| Average Quality Score (all) | 3.39 | 2.23 | 2.03 |

All of the data consistently shows that the inventive bread is clearly superior to Control 1 and better than Control 2.

**Example 2.** This example illustrates the preparation fully assembled frozen sandwiches using the three bread products (both punched and non-punched in bun form) described in Example 1. For evacuation, each fully assembled frozen sandwich was placed on a raised, vented tray without a susceptor and microwaved at full power from the frozen state until the center portion of the filling reached a minimum temperature of about 160°F; typically the time required to reach this minimum temperature was about 3.5 minutes; the temperature range of the filling was about 160 to about 165°F. The quality of the bread was evaluated after microwave treatment using similar criteria as in Example 1 except that the crumb parameters were not obtained since there was filling contacting the crumb. The data was converted to a single average quality score on a 1-5 scale (1 being best with 5 being worst).

A filling comprising about 60 percent cubed chicken, about 15 percent diced vegetables, about 7 percent spinach, and about 18 percent shredded asiago and mozzarella cheese was prepared by mixing. The filling was shaped into a patty (about 5/8 inches thick) so as to be co-extensive with the bun and then frozen. The fully assembled sandwich was then formed by placing the frozen filling patty between the top and bottom bread portions and frozen at about 20°F for about 24 hours. The fully assembled frozen sandwich products weighted about 8 ounces.

The following results for the overall quality of the bread portion of the microwave heated sandwiches (data at 5 and 15 minutes after microwaving combined) were obtained.

| | Control 1 Sandwich | Control 2 Sandwich | inventive Sandwich |
|---|---|---|---|
| Average Quality Score (non-punched) | 2.76 | 2.47 | 2.25 |
| Average Quality Score (punched) | 2.34 | 2.19 | 2.17 |
| Average Quality Score (all) | 2.55 | 2.33 | 2.21 |

The inventive sandwich had good organoleptic properties and was clearly superior to Control 1 and better than Control 2 sandwiches. The inventive sandwich prepared with punched bread was somewhat better than the inventive sandwich prepared with non-punched bread.

**Example 3.** This example provides a comparison of the inventive sandwich of Example 2 (using the punched bread in the form of a bun and the chicken/vegetable/cheese filling) with a commercially available frozen sandwich. The commercial sandwich (Stouffer's Corner Bistro^{®} Philly-Style Steak and Cheese Panini) was assembled by placing the individual slices with filling together to form an assembled sandwich. Both the inventive assembled sandwich (about 8ounces) and the assembled commercial sandwich (about 6 ounces) were heated separately from the frozen state in a microwave oven at full power for 3.5 minutes. The temperature of the filling reached a minimum of about 160°F for both sandwiches.

The heated sandwiches were allowed to stand for about 5 minutes before evaluation. The bread portion of heated commercial sandwich had a chewy, but acceptable, crumb texture and an extremely chewy and unacceptable crust. The bread portion of the heated inventive sample had good overall texture and organoleptic properties with some, but acceptable, hardness at the ends. The heated inventive sample was of better overall quality.

**Example 4.** This example provides a comparison of the inventive sandwich (using two slices of bread made from a loaf of the inventive formula and the chicken/vegetable/cheese filling of Example 2) with bread from a commercially available frozen sandwich (Stouffer's Corner Bistro^{®} Panini) and the same chicken/vegetable/cheese filling of Example 2. The inventive dough composition was used to prepare a loaf (about 4 by about 4 inches and about 13 inches long) and then baked at about 400°F for about 25-35 minutes. After cooling, the loaf was cut into slices about ½ inches thick. The chicken/vegetable/cheese filling of Example 2 was then formed into patty of about 26 square inches (and of a form co-extensive with the bread slices) and about 5/8 inches thick and then frozen. The frozen patty was placed between two slices of the bread and then frozen at about 20°F for about 24 hours. The fully assembled frozen sandwich was about 7 ounces.

The fully assemble frozen sandwich was then heated in a microwave oven at full power for 3.5 minutes on a raised, vented cardboard platform (without a susceptor). The temperature of the filling in each sandwich reached a minimum of about 160°F. After standing for about 5 minutes, the top bread slice of the heated inventive sandwich had toasted, but not hard, texture (especially at the corner and crust areas) whereas the bottom slice was somewhat steamed and softer than the top slice. Overall, the heated sandwich had very good texture and organoleptic properties. The heated commercial sandwich, on the other hand, had a slightly chewy (but acceptable) crumb but a very chewy and leathery crust (and not acceptable).

**Example 5.** The inventive fully assembled frozen sandwich of Example 4 was heated in a microwave oven at full power for 3.5 minutes using top and bottom susceptors as described in U.S. Patent Application Serial No. 11/284,801 (filed November 22, 2005). The temperature of the filling reached a minimum of 180°F. After standing for about 5 minutes, the top bread slice of the heated sandwich had a toasted, but not hard, texture (especially at the corners and crust portion) whereas the bottom slice was somewhat softer with toasted areas where it contacted the susceptor. Overall, the heated sandwich of this example had excellent texture and organoleptic properties. Indeed, the heated inventive sandwich of this example was better than the heated inventive sandwich of Example 4 due to the toasting and crisping of the bread on the bottom of the sandwich.

## Claims

1. A fully assembled frozen food product comprising a fully baked or par-baked farinaceous portion having a top bread portion and a bottom bread portion and having a filling between, and co-extensive with, the top bread and bottom bread portions, wherein the fully baked or par-baked farinaceous portion has a water activity of about 0.9 to about 0.98, wherein the fully assembled frozen food product has a frozen shelf life of at least about 120 days when sealed in a package, wherein the fully assembled frozen food product can be heated in a microwave oven to provide a heated food product which is then ready to be eaten, wherein the farinaceous portion of the heated food product is not dried out and wherein the filling of the heated food product has an essentially uniform temperature.

2. The fully assembled frozen food product of claim 1, wherein the fully baked or par-baked farinaceous portion is prepared from a dough composition comprising, in baker's percentages, 100 percent flour, about 0.5 to about 5 percent compressed yeast, 0 to about 0.5 percent sodium stearoyl lactylate, about 0.5 to about 3 percent salt, about 4 to about 12 percent sweetener, 0 to about 0.5 percent calcium propionate, about 5 to about 15 percent oil, about 50 to about 68 percent water, about 0.1 to about 2 percent monoglycerides and diglycerides, about 0.2 to about 1.5 percent lecithin, about 0.1 to about 1 percent xanthan gum, about 0.2 to about 1.5 percent guar gum, about 0.2 to about 1.5 percent methylcellulose, about 0.1 to about 0.5 percent diacetyl tartaric acid esters of monoglycerides, and 0 to about 1 percent spices, seasonings, and flavors.

3. The fully assembled frozen food product of Claim 1 or 2, wherein the dough composition comprises, in baker's percentages, 100 percent flour, about 2 to about 3 percent compressed yeast, about 0.3 to about 0.45 percent sodium stearoyl lactylate, about 0.75 to about 1.75 percent salt, about 6 to about 10 percent sweetener, about 0.4 to about 0.5 percent calcium propionate, about 9 to about 13 percent oil, about 55 to about 64 percent water, about 0.1 to about 1.5 percent monoglycerides and diglycerides, about 0.4 to about 0.6 percent lecithin, about 0.25 to about 0.45 percent xanthan gum, about 0.4 to about 0.6 percent guar gum, about 0.3 to about 0.6 percent methylcellulose, about 0.3 to about 0.6 percent diacetyl tartaric acid esters of monoglycerides, and about 0.1 to about 0.5 percent spices, seasonings, and flavors.

4. A kit comprising (1) a fully assembled frozen sandwich product contained within a package and (2) a susceptor suitable for use in heating the fully assembled frozen sandwich product in a microwave oven, wherein the fully assembled frozen sandwich product comprises a fully baked or par-baked farinaceous portion having a top bread portion and a bottom bread portion and having a filling between, and co-extensive with, the top bread and bottom bread portions, wherein the fully baked or par-baked farinaceous portion has a water activity of about 0.9 to about 0.98, wherein the fully assembled frozen sandwich product has a frozen shelf life of at least about 120 days when sealed in the package, wherein the fully assembled frozen sandwich product can be heated in a microwave oven using the susceptor to provide a heated sandwich product which is then ready to be eaten, wherein the fully baked or par-baked farinaceous portion of the heated sandwich product is not dried out and wherein the filling of the heated sandwich product has an essentially uniform temperature.

5. The kit of claim 4, wherein the fully baked or par-baked farinaceous portion is prepared from a dough composition comprising, in baker's percentages, 100 percent flour, about 0.5 to about 5 percent compressed yeast, 0 to about 0.5 percent sodium stearoyl lactylate, about 0.5 to about 3 percent salt, about 4 to about 12 percent sweetener, 0 to about 0.5 percent calcium propionate, about 5 to about 15 percent oil, about 50 to about 68 percent water, about 0.1 to about 2 percent monoglycerides and diglycerides, about 0.2 to about 1.5 percent lecithin, about 0.1 to about 1 percent xanthan gum, about 0.2 to about 1.5 percent gear gum, about 0.2 to about 1.5 percent methylcellulose, about 0.1 to about 0.5 percent diacetyl tartaric acid esters of monoglycerides, and 0 to about 1 percent spices, seasonings, and flavors.

6. The kit of Claim 4 or 5, wherein the dough composition comprises, in baker's percentages, 100 percent flour, about 2 to about 3 percent compressed yeast, about 0.3 to about 0.45 percent sodium stearoyl lactylate, about 0.75 to about 1.75 percent salt, about 6 to about 10 percent sweetener, about 0.4 to about 0.5 percent calcium propionate, about 9 to about 13 percent oil, about 55 to about 64 percent water, about 0.1 to about 1.5 percent monoglycerides and diglycerides, about 0.4 to about 0.6 percent lecithin, about 0.25 to about 0.45 percent xanthan gum, about 0.4 to about 0.6 percent gear gum, about 0.3 to about 0.6 percent methylcellulose, about 0.3 to about 0.6 percent diacetyl tartaric acid esters of monoglycerides, and about 0.1 to about 0.5 percent spices, seasonings, and flavors.

7. The kit of any one of Claims to 6, wherein the top bread portion has a first top surface and a first bottom surface, wherein the bottom bread portion has a second top surface and a second bottom surface, wherein the first bottom surface and the second top surface contact the filing, and wherein the first top surface, the second bottom surface, or both the first top surface and the second bottom surface, are treated to provide a crispy texture.

8. The kit of any one of Claims 4 to 7, wherein the susceptor comprises a top susceptor and a bottom susceptor such that the fully assembled frozen sandwich product can be placed between the top susceptor and the bottom susceptor such that the bottom bread portion is in contact with the bottom susceptor and the top bread portion is in contact with the top susceptor the fully assembled frozen sandwich product is heated in the microwave oven.

9. A fully baked or par-baked bread product, said fully baked or par-baked bread product is prepared from a dough composition comprising, in baker's percentages, 100 percent flour, about 0.5 to about 5 percent compressed yeast, 0 to about 0.5 percent sodium stearoyl lactylate, about 0.5 to about 3 percent salt, about 4 to about 12 percent sweeteners, 0 to about 0.5 percent calcium propionate, about 5 to about 15 percent oil, about 50 to about 68 percent water, about 0.1 to about 2 percent monoglycerides and diglycerides, about 0.2 to about 1.5 percent lecithin, about 0.1 to about 1 percent xanthan gum, about 0.2 to about 1.5 percent guar gum, about 0.2 to about 1.5 percent methylcellulose, about 0.1 to about 0.5 percent diacetyl tartaric acid esters of monoglycerides, and 0 to about 1 percent spices, seasonings, and flavors; wherein the fully baked or par-baked bread product is suitable for storage in a frozen state for at least about 120 days when stored in a package and can be heated in a microwave oven from the frozen state to provide a heated bread product with good organoleptic properties.

10. The fully baked or par-baked bread product of claim. 9, wherein the fully baked or par-baked bread product is incorporated into a fully assembled frozen sandwich product comprising a fully baked or par-baked farinaceous portion having a top bread portion and a bottom bread portion and having a filling between, and co-extensive with, the top bread and bottom bread portions, wherein the fully assembled frozen sandwich product can be heated in a microwave oven to provide a heated sandwich product which is then ready to be eaten, wherein the farinaceous portion of the heated sandwich product is not dried out and wherein the filling of the heated sandwich product has an essentially uniform temperature.

11. The fully baked or par-baked bread product of Claim 9 or 10, wherein the dough composition comprises, in baker's percentages, 100 percent flour, about 2 to about 3 percent compressed yeast, about 0.3 to about 0.45 percent sodium stearoyl lactylate, about 0.75 to about 1.75 percent salt, about 6 to about 10 percent about 0.4 to about 0.5 percent calcium propionate, about 9 to about 13 3 percent oil, about 55 to about 64 percent water, about 0.1 to about 1.5 percent monoglycerides and diglycerides, about 0.4 to about 0.6 percent lecithin, about 0.25 to about 0.45 percent xanthan gum, about 0.4 to about 0.6 percent guar gum, about 0.3 to about 0.6 percent methylcellulose, about 0.3 to about 0.6 percent diacetyl tartaric acid esters of monoglycerides, and about 0.1 to about 0.5 percent spices, seasonings, and flavors.
